# EUROPÄISCHE PATENTSCHRIFT

(11) **EP 3 186 036 B1**
(45) Veröffentlichungstag und Bekanntmachung des Hinweises auf die Patenterteilung: **04.12.2019**
(21) Anmeldenummer: 15756598.7
(22) Anmeldetag: 20.08.2015
(51) Int. Cl.: B23Q 7/14, B61B 10/00, B65G 19/26, B65G 23/16, B65G 9/00, B65G 19/02

(54) **FÖRDERANLAGE MIT KETTE FÜR DEN TRANSPORT VON GEGENSTÄNDEN, INSBESONDERE WAREN, ENTLANG EINER VORGEGEBENEN STRECKE**
CONVEYING SYSTEM WITH CHAIN FOR TRANSPORTING ARTICLES, IN PARTICULAR GOODS, ALONG A PREDETERMINED PATH
INSTALLATION DE TRANSPORT À CHAÎNE POUR LE TRANSPORT D'OBJETS, EN PARTICULIER DE MARCHANDISES, SUR UN TRAJET PRÉDÉTERMINÉ

(30) Priorität: 27.08.2014 CH 12882014
(43) Veröffentlichungstag der Anmeldung: 05.07.2017
(73) Patentinhaber: Ferag AG, 8340 Hinwil (CH)
(72) Erfinder: GUHL, Simon, CH-8620 Wetzikon (CH)
(74) Vertreter: Rentsch Partner AG
(86) Internationale Anmeldenummer: PCT/EP2015/069155
(87) Internationale Veröffentlichungsnummer: WO 2016/030273

(56) Entgegenhaltungen:
- WO-A1-97/23386
- CA-C- 1 287 009
- FR-A1- 2 176 090
- JP-A- H07 267 340
- JP-U- S58 100 862
- US-A- 3 033 353

## Beschreibung

### TECHNISCHES GEBIET

Die vorliegende Erfindung bezieht sich auf das Gebiet der Fördertechnik. Sie betrifft eine Förderanlage gemäss dem Oberbegriff des Anspruchs 1.

### STAND DER TECHNIK

Für die automatische Beförderung von Gegenständen wie z.B. auf Bügeln hängenden Kleidungsstücken entlang von durch einen Raum geführten Schienen ist aus dem Stand der Technik eine Vielzahl von Systemen bekannt, die unter dem Stichwort "Power and free" einzuordnen sind und sich dadurch auszeichnen, dass sie die an Laufwagen hängenden Gegenstände durch parallel laufende, angetriebene und in Eingriff stehende Mitnehmer vorwärtsbewegen, die beim Auftreten eines Hindernisses für die Laufwagen jedoch automatisch ausser Eingriff geraten und an den stoppenden Laufwagen vorbei bewegt werden.

Die Druckschrift DE 10 2005 006 455 A1 offenbart ein Transport-System für hängende Gegenstände, insbesondere für auf Bügeln hängende Kleidungsstücke, mit einer Transport-Schiene, mit einer in der Transport-Schiene in einer Förderrichtung bewegbar angeordneten Antriebs-Kette, die nach unten ragende Mitnehmer aufweist, und mit in der Transport-Schiene unterhalb der Antriebs-Kette mittels Laufrollen gelagerten, mittels der Antriebs-Kette in Förderrichtung bewegbaren Halteelementen für die Gegenstände. Das Transport-System zeichnet sich dadurch aus, dass die Mitnehmer bolzenartig ausgebildet sind, dass die Halteelemente nur um ein Paar Laufrollen pendelnd in der Transport-Schiene gelagert sind und nach oben ragende Ansätze zum Eingriff in die Antriebs-Kette zwischen zwei benachbarten Mitnehmern aufweisen und dass zwischen der Transport-Schiene und den Halteelementen Mittel vorgesehen sind, die ein Aussereingriffbringen von Ansatz und Mitnehmer bei einer vorgegebenen Maximal-Neigung des Halteelementes gegenüber einer Normalen auf der Transport-Schiene in einer durch die Förderrichtung aufgespannten vertikalen Transportebene verhindern.

Die Druckschrift DE 10 2011 119 411 A1 offenbart eine nachträglich installierbare Stopper-Einheit für einen Hängeförderer, der einen Klinkenmitnehmer in einem zumindest einseitig offenen Schlitz einer Tragschiene, auf welcher Bügel durch Klinkenmitnehmer gleitend transportiert werden, stromabwärts in einer Förderrichtung transportiert, die parallel zur Längsrichtung der Tragschiene orientiert ist Die Stopper-Einheit umfasst eine Führung, die an dem Hängeförderer befestigbar ist, einen Schlitten, der einen Anschlagabschnitt aufweist, wobei der Schlitten mittels der Führung, vorzugsweise linear, in einer Querrichtung, die quer zur Längsrichtung orientiert ist, beweglich gelagert ist; und einen Antrieb, der an den Schlitten gekoppelt ist und der ausgebildet ist, während seiner Aktivierung den Schlitten aus einer Freigabestellung, in welcher der Anschlagabschnitt des Schlittens die Tragschiene nicht überragt, so dass die Bügel den Schlitten passieren können, entlang der Querrichtung in eine Stoppstellung auszufahren, in welcher der Anschlagabschnitt die Tragschiene, vorzugsweise über ihre gesamte Breite, überragt, wobei der Schlitten, wenn der Antrieb aktiviert ist, im Falle einer Krafteinwirkung in der Querrichtung in die Freigabestellung zurückziehbar ist und im Falle einer Krafteinwirkung, die ausschliesslich in der Längsrichtung wirkt, in seiner momentanen Stellung verbleibt.

Die Druckschrift DE 203 17 972 U1 beschreibt eine Hänge-Förderanlage mit einer Förderschiene, einer oberhalb der Förderschiene angeordneten, antreibbaren Förder-Einrichtung, an der Förder-Einrichtung angebrachten, zur Förderschiene gerichteten Klinken-Mitnehmern zum Transport von auf der Förderschiene verschiebbar befindlichen Bügel-Haken in einer Förderrichtung, wobei jeder Klinken-Mitnehmer einen mit der Förder-Einrichtung verbundenen Träger und eine Klinke aufweist, die einen in Förderrichtung nacheilenden Mitnehmer-Haken aufweist und die mittels einer Schwenkachse am Träger ist, die seitlich und oberhalb der Förderschiene und unter einem spitzen Winkel (d) von höchstens 60° zur Förderrichtung angeordnet ist.

Die Druckschrift US 6,367,612 B1 offenbart einen ausziehbaren Mitnehmer für ein Überkopf-Staufördersystem ("power and free"), der einen Körperabschnitt aus einem rechteckigen Zylinder umfasst, der mit einer Feder und Schieberelement innerhalb des Zylinders ausgestattet ist. Wenn eine Kraft, die größer ist als die statische Federkraft, auf das Schieberelement einwirkt, zieht sich das Schieberelement in den Körperabschnitt zurück, so dass die Bauhöhe des Mitnehmers reduziert wird. Durch sein selbsttätiges Zurückziehen erfordert der einziehbare Mitnehmer keine Änderungen an den angetriebenen und freien Schienen oder an den Laufwagen.

Die Druckschrift FR 2176090 A1 offenbart eine Förderanlage gemäß dem Oberbegriff des Anspruchs 1.

Alle bekannten Systeme arbeiten mit Eingriffskonfigurationen, die zwar beim Auftreten eines Hindernisses den Eingriff auflösen, dann aber wieder in eine stabile Eingriffs-Grundstellung zurückfallen. Durch diese "monostabile" Arbeitsweise ist der Einsatz der bekannten Systeme beschränkt. Darüber hinaus ist die monostabile Arbeitsweise mit einer erheblichen Geräuschentwicklung verbunden, weil z.B. beim "Überfahren" eines gestoppten Laufwagens durch die aufeinanderfolgenden, jeweils ausgelenkten und wieder in ihren Ausgangszustand zurückfallenden Mitnehmer ein ratterndes Geräusch entsteht.

### DARSTELLUNG DER ERFINDUNG

Es ist daher eine Aufgabe der Erfindung, eine Förderanlage anzugeben, die eine grössere Flexibilität und eine geräuscharme Arbeitsweise ermöglicht.

Diese und andere Aufgaben werden durch die Merkmale des Anspruchs 1 gelöst.

Ausgestaltungen der erfindungsgemässen Lösung ergeben sich aus den abhängigen Ansprüchen.

Die erfindungsgemässe Förderanlage für den Transport von Gegenständen, insbesondere Waren, entlang einer vorgegebenen Strecke umfasst eine Laufschiene sowie wenigstens einen auf dieser Laufschiene laufenden, entlang der Laufschiene frei beweglichen Laufwagen, sowie weiterhin eine angetriebene Eingreifvorrichtung, welche sich zumindest abschnittsweise entlang der Laufschiene erstreckt und eine Mehrzahl von entlang der Laufschiene bewegbaren Eingreifelementen umfasst, die zum Steuern der Bewegung des wenigstens einen Laufwagens mit dem Laufwagen in Eingriff gebracht werden können.

Sie zeichnet sich dadurch aus, dass die Eingreifelemente zwischen zwei stabilen Positionen hin und her bewegbar sind, wobei in der ersten stabilen Position die Eingreifelemente relativ zum wenigstens einen Laufwagen am Laufwagen vorbei bewegt werden können, ohne mit dem Laufwagen in Eingriff zu kommen (Nichteingreifposition), und wobei in der zweiten stabilen Position die Eingreifelemente bei einer Bewegung relativ zum wenigstens einen Laufwagen am Laufwagen vorbei zwangsweise mit dem wenigsten einen Laufwagen in Eingriff kommen (Eingreifposition).

Eine Ausgestaltung der Förderanlage nach der Erfindung ist dadurch gekennzeichnet, dass die Eingreifelemente in der Eingreifvorrichtung in Bewegungsrichtung hintereinander und untereinander gleichmässig beabstandet angeordnet sind.

Eine Ausgestaltung der Förderanlage nach der Erfindung ist dadurch gekennzeichnet, dass die Eingreifelemente jeweils um eine Schwenkachse verschwenkbar gelagert sind, und durch ein Verschwenken um die Schwenkachse von der einen in die andere stabile Position gebracht werden können.

Nach der Erfindung rasten die Eingreifelemente in den beiden stabilen Positionen jeweils ein.

Insbesondere ist die Raststellung der Eingreifelemente in der zweiten stabilen Position so ausgebildet, dass die Raststellung eines Eingreifelements aufgehoben und das Eingreifelement in die erste stabile Position verschwenkt wird, wenn eine entgegen der Bewegungsrichtung wirkende Kraft vorbestimmter Grösse an diesem Eingreifelement angreift. Insbesondere bewegen sich die Eingreifelemente beim Verschwenken jeweils an einem relativ zur Schwenkachse feststehenden Rastelement entlang und rasten in den beiden stabilen Positionen jeweils mit einer Ausnehmung am Rastelement ein.

Insbesondere ist das Rastelement als parallel zur Schwenkachse ausgerichteter Rastbolzen ausgebildet, und die Ausnehmungen am Eingreifelement sind als Rastmulden ausgebildet.

Insbesondere sind die Eingreifelemente als in der Schwenkebene liegende, in etwa V-förmige Haken ausgebildet, die zwei an einer Seite miteinander verbundene Schenkel aufweisen, wobei die Eingreifelemente jeweils am freien Ende des zweiten Schenkels verschwenkbar gelagert sind, und wobei am freien Ende des ersten Schenkels ein Kontaktkopf ausgebildet ist, mit dem das Eingreifelement in der Eingreifposition mit dem Laufwagen in Eingriff kommt.

Eine andere Ausgestaltung der Förderanlage nach der Erfindung ist dadurch gekennzeichnet, dass die Eingreifelemente an einer Kette angebracht sind, die angetrieben und abschnittweise entlang der Laufschiene bewegbar ist, und dass die Schwenkachse jedes Eingreifelements jeweils mit einer Gelenkachse der Kette zusammenfällt.

Insbesondere ist die Kette als Endloskette ausgebildet und über wenigstens zwei Umlenkräder geführt. Die Kette kann dabei auch als Rollenkette ausgeführt sein.

Insbesondere wird die Kette in dem Abschnitt, in welchem sie zum Zwecke des Eingriffs entlang der Laufschiene bewegt wird, derart in einer Führungsschiene geführt, dass sich die an der Kette angeordneten Eingreifelemente ausserhalb der Führungsschiene befinden und bewegen.

Insbesondere ist ein Mechanismus vorgesehen, mit welchem in der Nichteingreifposition befindliche Eingreifelemente zurück in die Eingreifposition gebracht werden können.

Insbesondere umfasst der Mechanismus eine ortsfeste Führungskulisse, welche von den vorbeibewegten Eingreifelementen abgetastet wird.

Insbesondere sind an den Eingreifelementen Mittel zum Abtasten der Führungskulisse angeordnet.

Insbesondere umfassen die Abtastmittel eine an jedem Eingreifelement drehbar angeordnete Abtastrolle.

Alternativ können die Abtastmittel eine an jedem Eingreifelement ausgebildeten Abtastnocken umfassen.

Es ist aber auch denkbar, dass der Mechanismus bewegbare Andrückmittel umfasst, welche zum Verschwenken der Eingreifelemente gegen die vorbeibewegten Eingreifelemente gedrückt werden.

Insbesondere umfassen die Andrückmittel an einer synchron laufenden Kette an die Eingreifelemente herangeführte Andrückelemente.

Es ist aber auch denkbar, dass die Andrückmittel wenigsten eine stationäre Andrückeinheit mit einem an die vorbeibewegten Eingreifelemente heranführbaren Wirkelement umfassen.

Eine andere Ausgestaltung der Förderanlage nach der Erfindung ist dadurch gekennzeichnet, dass die Eingreifelemente derart ausgebildet sind, dass sie in der zweiten stabilen Position bei einer schnelleren Bewegung des wenigstens einen Laufwagens den Laufwagen passieren lassen. Hierdurch sind Betriebszustände möglich, bei denen sich der Laufwagen, z.B. aufgrund eines Antriebs durch einen Umlaufförderer, schneller bewegt als die Eingreifelemente, also die Eingreifelemente gewissermassen "überholen" kann.

Insbesondere sind in diesem Fall die Eingreifelemente als in einer Schwenkebene liegende, in etwa V-förmige Haken ausgebildet, die zwei an einer Seite miteinander verbundene Schenkel aufweisen, wobei die Eingreifelemente jeweils am freien Ende des zweiten Schenkels verschwenkbar gelagert sind, wobei am freien Ende des ersten Schenkels ein Kontaktkopf ausgebildet ist, mit dem das Eingreifelement in der Eingreifposition mit dem Laufwagen in Eingriff kommt, wobei die Eingreifelemente zumindest im Bereich der Schenkel aus einem elastisch verformbaren Material bestehen, und wobei die Schenkel der Eingreifelemente jeweils durch einen in der Schwenkebene liegenden Schlitz in zwei gleichartige Teilschenkel unterteilt sind, die beim Passieren eines schnelleren Laufwagens aufgespreizt werden.

Darüber hinaus kann bei den Eingreifelementen jeweils im Bereich des ersten Schenkels auf der Aussenseite ein in den Schlitz mündender Einlauftrichter ausgebildet sein, welcher das Aufspreizen der Teilschenkel durch ein am Laufwagen angebrachtes Eingriffselement ermöglicht bzw. erleichtert.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer perspektivischen Darstellung (aus der Sicht von unten) einen Ausschnitt aus einer Förderanlage gemäss einem Ausführungsbeispiel der Erfindung;
- Fig. 2: die Förderanlage aus Fig. 1 mit der Antriebseinheit für die mit den Eingreifelementen bestückten Kette im Staubetrieb;
- Fig. 3: in verschiedenen Schritten (Fig. 3(a) bis (d)) das Verhalten der Eingreifelemente der Förderanlage aus Fig. 1 beim Staubetrieb;
- Fig. 4: eine Förderanlage gemäss einem anderen Ausführungsbeispiel der Erfindung, bei der die Eingreifelemente durch Abfahren einer Führungskulisse mit Abtastrollen in die Eingreifposition verschwenkt werden;
- Fig. 5: ein zu Fig. 4 vergleichbares weiteres Ausführungsbeispiel, bei dem die Eingreifelemente durch Abfahren einer Führungskulisse mit Abtastnocken in die Eingreifposition verschwenkt werden;
- Fig. 6: ein zu Fig. 4 und 5 vergleichbares weiteres Ausführungsbeispiel, bei dem die Eingreifelemente durch mitlaufende Andrückelemente in die Eingreifposition verschwenkt werden;
- Fig. 7: das Verschwenken der Eingreifelemente in die Eingreifposition mittels einer stationären Andrückeinheit;
- Fig. 8: den Schnitt durch die Führungsschiene der mit den Eingreifelementen bestückten Kette mit der darin geführten Kette;
- Fig. 9, 10: die Problematik, die entsteht, wenn ein Laufwagen beispielsweise durch einen an einer Seite angreifenden Umlaufförderer (UF) schneller bewegt wird, als ein an der anderen Seite angreifender Stauförderer (SF);
- Fig. 11: Seitenansichten aus verschiedenen Perspektiven eines Eingreifelements bzw. Mitnehmers, das eine höhere Geschwindigkeit des Laufwagens gegenüber einem Stauförderer zulässt;
- Fig. 12: ein mit Eingreifelementen gemäss Fig. 11 ausgestatteten Stauförderers (SF') im Zusammenspiel mit einem Laufwagen; und
- Fig. 13: die Konfiguration aus Fig. 12 aus einer anderen Perspektive.

### WEGE ZUR AUSFÜHRUNG DER ERFINDUNG

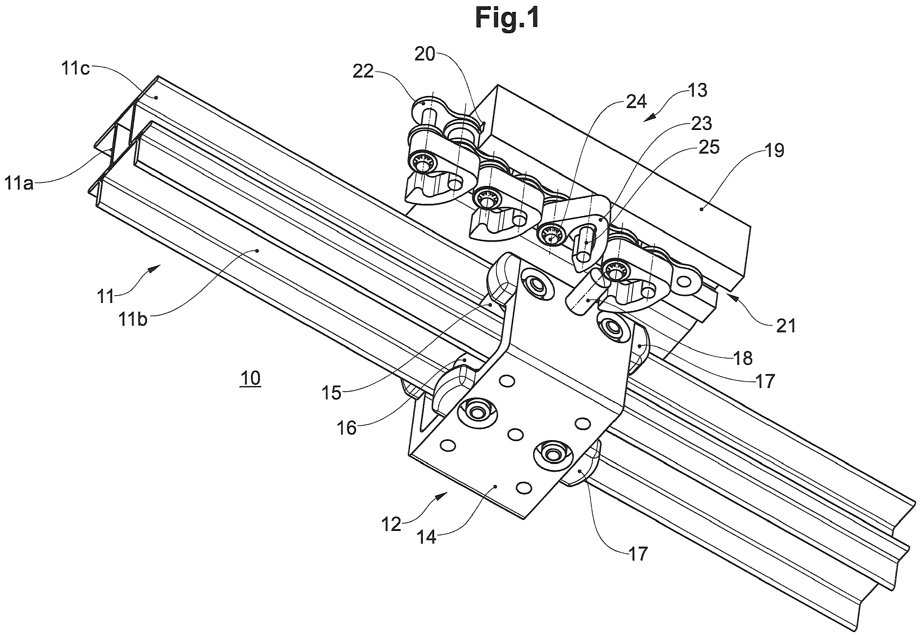

Fig. 1 zeigt in einer perspektivischen Darstellung (aus der Sicht von unten) einen Ausschnitt aus einer Förderanlage gemäss einem Ausführungsbeispiel der Erfindung. Die Förderanlage 10 der Fig. 1 umfasst eine durch den Raum geführte, hängend oder anderweitig befestigte Laufschiene 11, von der in Fig. 1 nur ein kurzer Abschnitt beispielhaft wiedergegeben ist, und die Kurven sowie Steigungs- und Gefällestrecken aufweisen kann. Auf der Laufschiene 11 können sich einzelne Laufwagen grundsätzlich frei entlang der Laufschiene bewegen, von denen in Fig. 1 beispielhaft ein Laufwagen 12 wiedergegeben ist.

Die Laufschiene 11 weist im Querschnittsprofil drei nach aussen offene C- bzw. U-förmige Profilabschnitte 11a, 11b und 11c auf, die spiegelsymmetrisch zu einer vertikalen Mittelebene angeordnet sind. Umgreift der Laufwagen 12 mit seinem im Profil U-förmigen Wagenkörper die Laufschiene 11 von unten, dienen die zur Seite hin offenen Profilabschnitt 11a und 11c als Tragschienen, in denen der Laufwagen 12 mit entsprechenden, paarweise vorhandenen Tragrollen 15 läuft. Der nach unten offene Profilabschnitt 11b übernimmt Führungsaufgaben und nimmt die ebenfalls paarweise vorhandenen Führungsrollen 16 des Laufwagens 12 auf.

An Vorder- und Rückseite des Laufwagens 12 sind an mehreren Stellen elastisch verformbare Puffer 17 angeordnet, die das Auflaufen mehrerer hintereinander auf der Laufschiene 11 laufenden Laufwagen 12 abfedern.

Die Laufwagen 12 verfügen über keinen eigenen Antrieb, sondern setzen sich entweder auf Gefällestrecken durch Einwirkung der Schwerkraft in Bewegung, oder müssen durch aussen neben der Laufschiene 11 angeordnete Antriebsmechanismen, die nachfolgend noch näher beschrieben werden, vorwärts und aufwärts bewegt oder auch abgebremst werden. Für einen entsprechenden Eingriff von aussen sind am Laufwagen 12 seitlich abstehend und gegenüberliegend Eingriffselemente 18 angebracht, die im dargestellten Beispiel die Form von Bolzen haben. Laufschiene 11 und Laufwagen 12 in der dargestellten Form sind Gegenstand separater Patentanmeldungen.

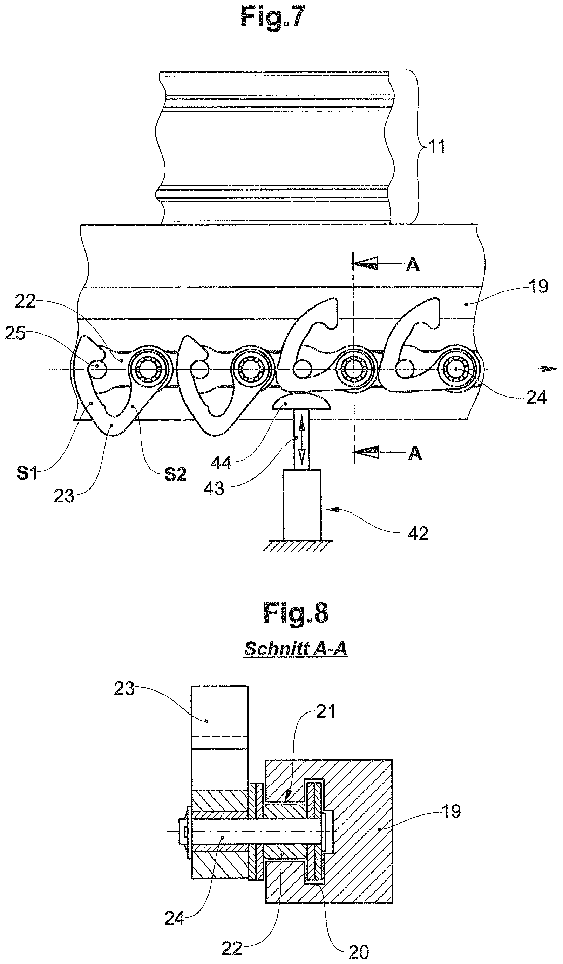

Für den (einschaltbaren und wieder lösbaren) Antrieb der einzelnen Laufwagen 12 ist gemäss Fig. 1 eine Eingreifvorrichtung 13 vorgesehen, die eine mit verschwenkbaren Eingreifelementen 23 bestückte Kette 22 umfasst, die in einer Führungsschiene 19 geführt zumindest abschnittweise parallel zur Laufschiene 11 läuft. Die Führung der Kette 22 in der Führungsschiene 19 ist im Schnitt im Detail in Fig. 8 wiedergegeben. Die Kette 22 gleitet mit einer Seite in einer Führungsnut 20 in der Führungsschiene 19 und ragt mit der anderen Seite durch einen Öffnungsschlitz 21 hindurch nach aussen. An dieser aussen liegenden Seite der Kette 22 sind die Eingreifelemente 23 verschwenkbar angeordnet. Als Schwenkachse 24 für die Eingreifelemente 23 dient dabei jeweils eine (verlängerte) Gelenkachse der Kette 22.

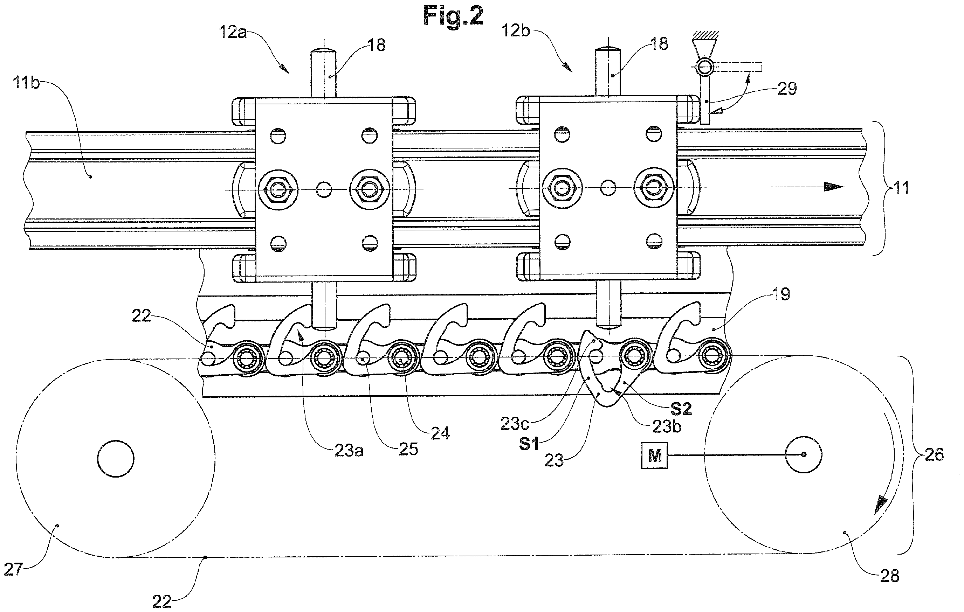

Die Eingreifelemente 23 sind als in der Schwenkebene liegende, in etwa V-förmige Haken ausgebildet, die zwei an einer Seite miteinander verbundene Schenkel S1 und S2 aufweisen (siehe Fig. 2 oder 7). Am freien Ende des zweiten Schenkels S2 ist das Eingreifelement 23 jeweils verschwenkbar an der Kette 22 gelagert. Am freien Ende des ersten Schenkels S1 ist ein Kontaktkopf 23c ausgebildet, mit dem das Eingreifelement 23 in der Eingreifposition mit dem zugehörigen Eingriffselement 18 am Laufwagen 12 in Eingriff kommt (siehe z.B. das ganz linke Eingreifelement in Fig. 2).

Der Schwenkmechanismus der Eingreifelemente 23 ist so ausgebildet, dass die Eingreifelemente 23 jeweils zwischen zwei stabilen Positionen hin und her geschwenkt werden können. In der einen stabilen Position (siehe z.B. die beiden rechten Eingreifelemente in Fig. 7) kommen die Eingreifelemente 23 zwangsläufig über das Eingriffselement 18 mit einem Laufwagen 12 in Eingriff, wenn dieser bei einer Vorwärtsbewegung der Kette 22 von den Eingreifelementen 23 eingeholt wird. In der anderen stabilen Position (siehe z.B. die beiden linken Eingreifelemente in Fig. 7) sind die Eingreifelemente 23 aus der Bewegungsbahn der Eingriffselemente 18 zurückgeschwenkt, so dass ein Eingriff nicht möglich ist (Nichteingreifposition). Es versteht sich von selbst, dass die Abmessungen (Länge) der Eingriffselemente 18, sowie die Anordnung (Abstand) der Kette 22 relativ zur Laufschiene und der Schwenkbereich der Eingriffselemente 23 so aufeinander abgestimmt sein müssen, dass dieses Verhalten möglich ist.

Die beiden stabilen (End-)Positionen der Eingreifelemente 23 gemäss Fig. 7 werden durch einen Rastmechanismus festgelegt, der für jedes Eingreifelement 23 ein im Innenbereich des Eingreifelements angeordnetes Rastelement 25 in Form eines runden Bolzens vorsieht, sowie zwei auf der Innenseite des Schenkels S1 ausgebildete Rastmulden 23a und 23b (Fig. 2). Das bolzenartige Rastelement 25 ist für das jeweilige Eingreifelement genau an dem auf die Schwenkachse nachfolgenden nächsten Kettengelenk angeordnet. Die eine Rastmulde 23a ist am freien Ende des Schenkels S1 unmittelbar vor dem Kontaktkopf 23c angeordnet. Die andere Rastmulde 23b befindet sich unmittelbar vor dem Übergang vom Schenkel S1 zum Schenkel S2. Rastet das Eingreifelement 23 mit der inneren Rastmulde 23b am Rastelement 25 ein (siehe die beiden rechten Eingreifelemente 23 in Fig. 7), befindet sich das Eingreifelement in der stabilen Eingreifposition. Rastet das Eingreifelement 23 dagegen mit der äusseren Rastmulde 23 am Rastelement 25 ein (siehe die beiden linken Eingreifelemente 23 in Fig. 7), befindet sich das Eingreifelement 23 in der stabilen neutralen Position, in der ein Eingriff nicht möglich ist (Nichteingreifposition). Es versteht sich von selbst, dass für ein Funktionieren des beschriebenen Rastmechanismus eine ausreichende Biegeelastizität des Engreifelements 23 in der Schwenkebene notwendig ist.

Wie sich aus der schematischen Darstellung der Fig. 2 ergibt, ist die Kette 22 Teil einer Antriebseinheit 26, die zwei Umlenkräder 27 und 28 aufweist, von denen wenigstens eines motorisch angetrieben ist (Motor M), und über welche die Kette 22 als Endloskette geführt ist. Dargestellt ist die Situation beim Staubetrieb, bei dem ein in die Laufbahn der Laufwagen 12a, 12b einschwenkbarer Anschlag 29 den freien Vorwärtslauf der Laufwagen begrenzt. Zunächst werden die Laufwagen 12a, 12b durch in die Eingreifposition eingeschwenkte Eingreifelemente 23 mit der sich nach rechts bewegenden Kette 22 mitgenommen, bis ein Laufwagen 12b am Anschlag 29 anstösst und gestoppt wird. Dies erzeugt über das mit dem zugehörigen Eingreifelement 23 in Eingriff stehende Eingriffselement 18 einen gegen die Laufrichtung wirkende Gegenkraft, die das Eingreifelement 23 des gestoppten Laufwagens 12b aus der stabilen Eingreifposition in die stabile Nichteingreifposition herausschwenkt, wo das Eingreifelement dann einrastet.

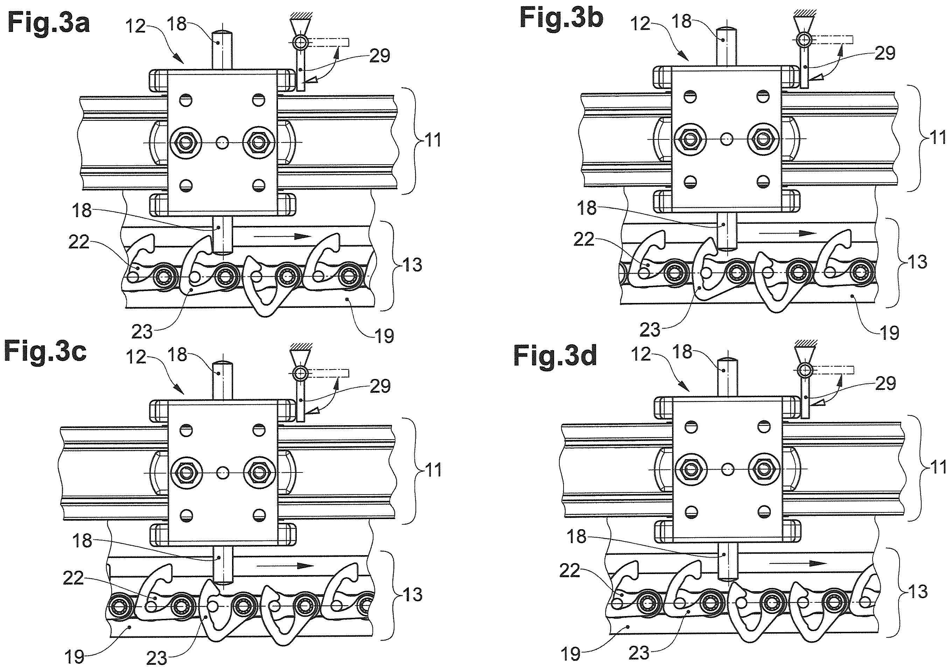

Die einzelnen Phasen dieses Vorgangs sind noch einmal in den Teilfiguren (a) bis (d) der Fig. 3 wiedergegeben, wo in Fig. 3(a) der volle Eingriff dargestellt ist, der über mehrere Zwischenschritte (b) und (c) bis zum vollen Herausschwenken in Fig. 3(d) führt. Derselbe Vorgang läuft ab, wenn weitere herangeführte Laufwagen, wie der Laufwagen 12a in Fig. 2 auf den bereits gestoppten Laufwagen 12b auffahren und das zugehörige Eingreifelement 23 aufgrund der entstehenden Gegenkraft ebenfalls ausser Eingriff geschwenkt wird.

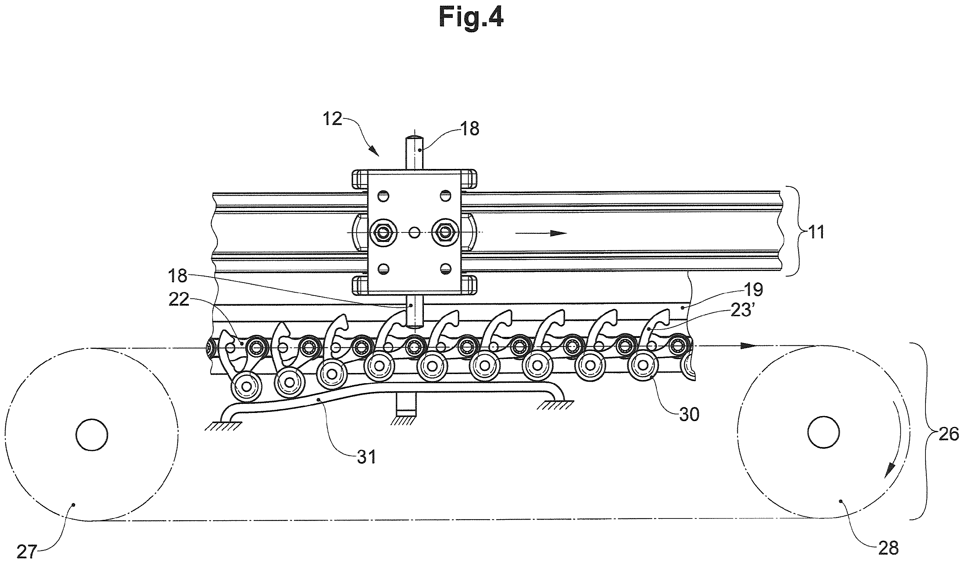

Da bei einem derartigen Staubetrieb immer mehr Eingreifelemente 23 aus der Eingriffsposition herausgeschwenkt werden und von selbst nicht wieder in die Eingriffposition gelangen können, Ist gemäss Fig. 4-7 ein Mechanismus vorgesehen, der gezielt und kontrolliert die einzelnen Eingreifelemente 23 aus der Nichteingreifposition wieder in die Eingreifposition zurückschwenkt.

Ein erster solcher Mechanismus ist in Fig. 4 wiedergegeben. Hierzu sind die Eingreifelemente 23' in dieser Ausgestaltung jeweils mit einer an der Spitze des "V" drehbar angeordneten Abtastrolle 30 versehen, mit welcher das Eingreifelement 23' beim Verfahren der Kette 22 eine darunter angeordnete Führungskulisse 31 abtastet. Diese Führungskulisse 31 weist einen ansteigenden Abschnitt auf, der über die Abtastrolle 30 das darüber hinwegbewegte Eingreifelement 23' aus der stabilen Nichteingreifposition ausrastet und in die Eingreifposition verschwenkt.

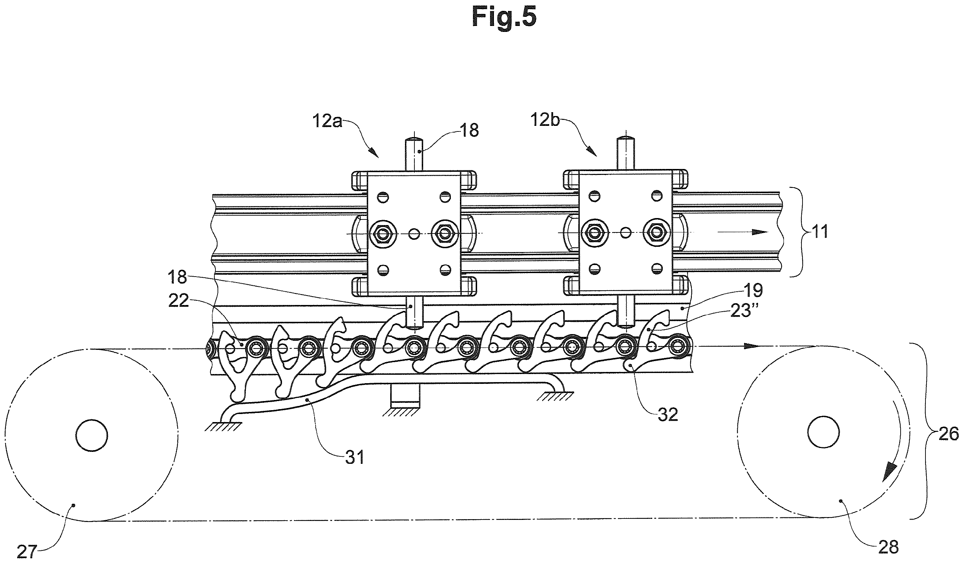

Eine andere Ausgestaltung eines solchen Mechanismus ist in Fig. 5 dargestellt. Hier sind die Eingreifelemente 23" an der Spitze des "V" jeweils mit einem Abtastnocken 32 versehen, der wiederum an einer entsprechenden Führungskulisse 31 entlangfährt.

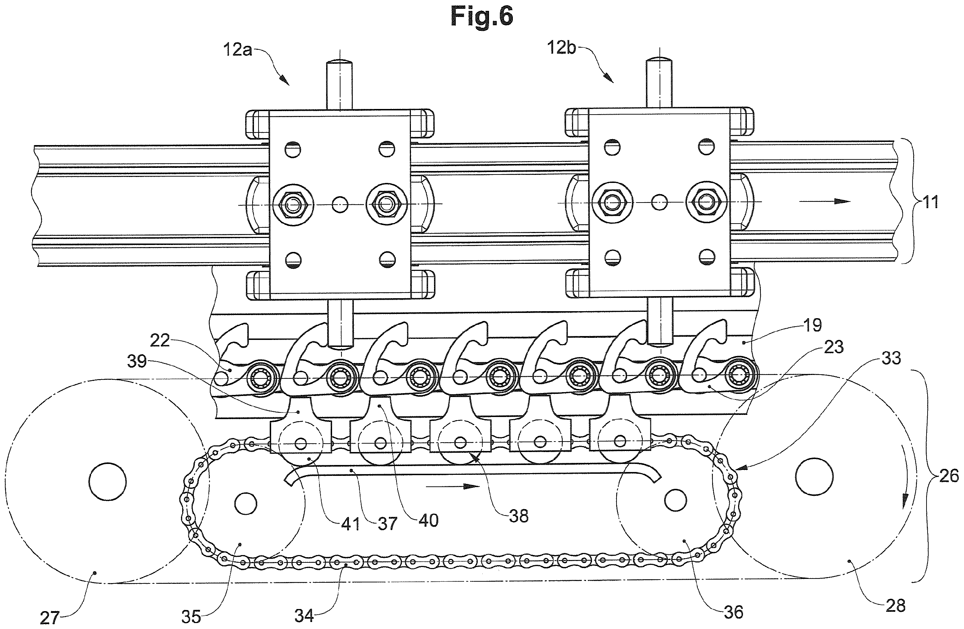

Es ist aber auch denkbar, gemäss Fig. 6 und 7 aktive Mechanismen zum Verschwenken der Eingreifelemente 23 zurück in die Eingreifposition vorzusehen. In Fig. 6 werden hier mittels einer weiteren Antriebseinheit 33 mit einer Kette 34 und Umlenkrädern 35, 36 Andrückelemente 38 in einem Parallelabschnitt an der Kette 22 mit den Eingreifelementen 23 synchron entlang bewegt, wobei die Andrückelemente 38, die sich in diesem Abschnitt jeweils mit einer Rolle 41 an einer Stützschiene 37 abstützen, mit ihrem Andrücckörper 39, der ein auf die Eingreifelemente 23 ausgerichtetes Wirkelement in Form eines festen Stempels 40 aufweist, mit diesem Stempel 40 gegen den Schenkel S2 des zugehörigen Eingreifelements drückt und dieses so in die Eingreifposition drückt bzw. verschwenkt. Es versteht sich von selbst, dass als Wirkelement anstelle des Stempels 40 auch eine Rolle oder dgl. eingesetzt werden kann.

Gemäss Fig. 7 kann aber auch eine einzelne, ortsfeste Andrückeinheit 42 vorgesehen werden, die mittels einer herausfahrbaren Stange 43 mit einem am vorderen Ende der Stange 43 angebrachten Linsenkopf-artigen Stempel 44 (oder einer Rolle oder dgl.) gegen den Schenkel S2 eines sich vorbeibewegenden Eingreifelements drückt. Wird eine solche Andrückeinheit 42 in Abstimmung mit der Bewegung der Kette 22 gesteuert, können einzelne ausgewählte Eingreifelemente 23 aktiviert werden. Bleibt der Stempel 44 für einen gewissen Zeitraum ausgefahren, können mehrere Eingreifelemente 23 hintereinander aktiviert werden.

An dieser Stelle sei darauf hingewiesen, dass die Eingreifelemente 23 nicht nur Laufwagen 12 in Bewegung setzen können, wie dies vorgängig erläutert worden ist, sondern auch sich frei bewegende Laufwagen 12 abbremsen können. Wenn sich also z.B. der in Fig. 2 gezeigte Laufwagen 12a (z.B. aufgrund eines Gefälles) schneller bewegt als die daneben laufende Kette 22, löst er sich mit seinem Eingriffselement 18 vom zugehörigen Eingreifelement 23 ganz links in der Fig. 2. Diese freie Bewegung wird erst dann wieder gebremst und auf Kettengeschwindigkeit reduziert, wenn er das nächste nicht eingeschaltete Eingreifelement (Zweites von links) überholt hat und mit seinem Eingriffselement 18 an der Aussenseite des Schenkels S1 des nächsten Eingriffselements (Drittes von links) anstösst.

In allen Figuren ist eine Kette 22 dargestellt, an der die Eingreifelemente 23 mit maximaler Dichte angeordnet sind. Es ist jedoch selbstverständlich auch denkbar, Kettenglieder ohne Eingreifelement zwischenzuschalten, wenn es der Einsatzzweck erfordert oder möglich macht. Desgleichen sind im Rahmen der Erfindung andere Arten von Rastmechanismen denkbar, um die beiden stabilen Positionen der Eingreifelemente zu gewährleisten.

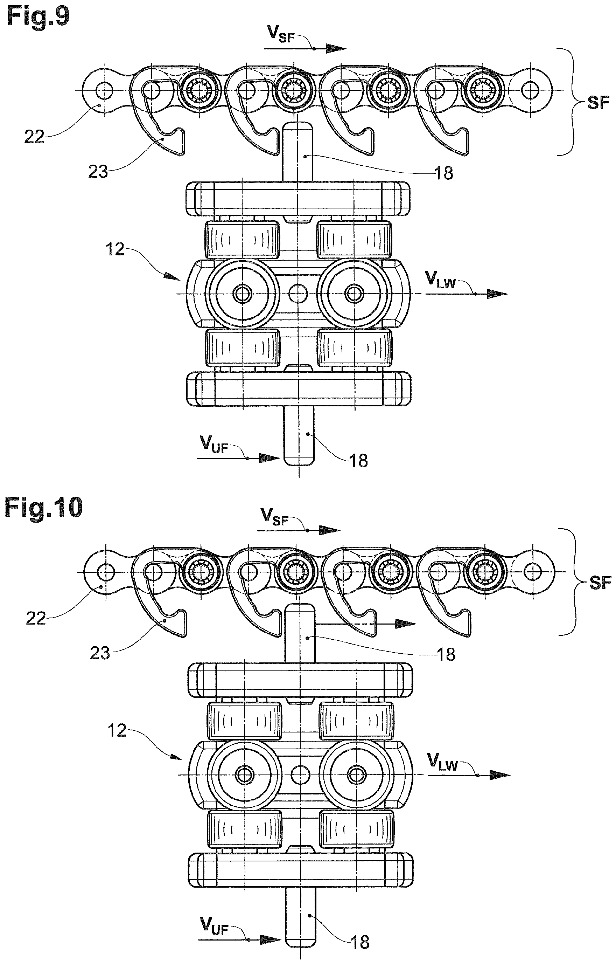

Bei einem Stauförderer der in Fig. 1 gezeigten Art kann sich eine Problematik ergeben, die anhand der Fig. 9 und 10 erläutert werden kann: Wenn der Laufwagen 12 auf der einen Seite mit einem Stauförderer SF in Verbindung gebracht wird und auf der anderen, gegenüberliegenden Seite beispielsweise durch einen Umlaufförderer UF (nicht explizit in Fig. 9 und 10 dargestellt) angetrieben wird, können drei separate Geschwindigkeiten auftreten, nämlich die Geschwindigkeit v_{SF} des Stauförderers SF, die Geschwindigkeit v_{LW} des Laufwagens 12 und die Geschwindigkeit v_{UF} des (nicht gezeigten) Umlaufförderers (Fig. 9).

Mit den in den vorherigen Figuren gezeigten Ausführungsbeispielen ist es nicht möglich, mit einem Laufwagen 12 schneller zu fahren als die Kette des Stauförderers SF. Gilt v_{UF} = v_{LW} < v_{SF}, wird das auf den Laufwagen 12 treffende Eingreifelement 23 von der Eingreifposition in die Nichteingreifposition herausgeschwenkt. Ist dagegen v_{UF} = v_{LW} > v_{SF}, prallt der Laufwagen mit dem Eingriffselement 18 (von hinten) auf das nächste Eingreifelement 23 und es kommt zu einem Zusammenstoss. Hierdurch wird die Bandbreite der möglichen Anlagenkonzepte für entsprechende Förderanlagen deutlich eingeschränkt.

Um mehr Freiheitsgrade bei den Anlagekonzepten zu gewinnen, wäre es wünschenswert, wenn im Fall v_{LW} > v_{SF} der Stauförderer SF den Laufwagen mit seinem Eingriffselement 18 ohne grössere Behinderung passieren lässt (in Fig. 10 durch den Pfeil am oberen Eingriffselement angedeutet).

Dieser Wunsch wird erfüllt, wenn die Eingreifelemente derart ausgebildet sind, dass sie in der zweiten stabilen Position bei einer schnelleren Bewegung des wenigstens einen Laufwagens 12 den Laufwagen 12 passieren lassen.

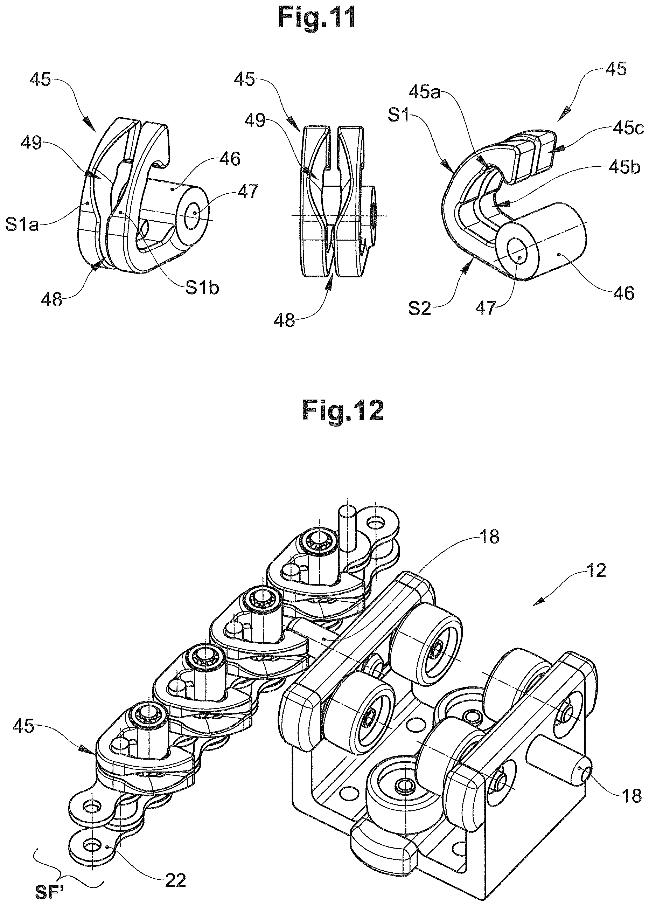

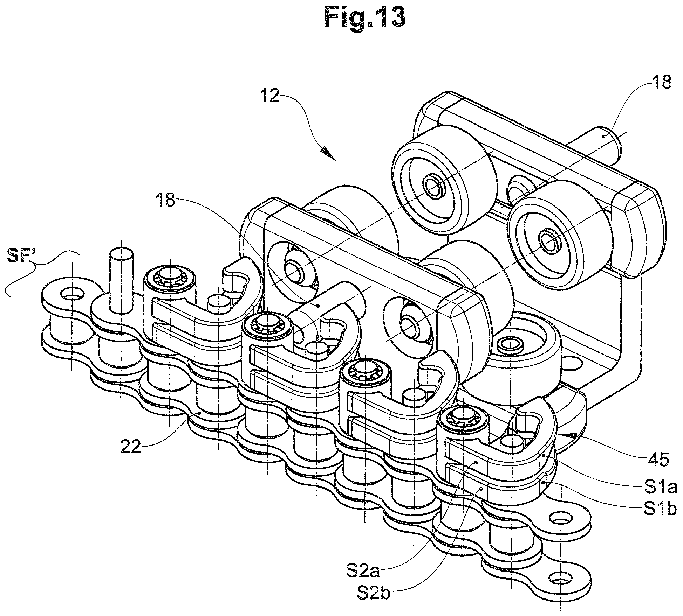

Ein derartiges Eingreifelement ist in Fig. 11 aus verschiedenen Perspektiven gezeigt. Das Eingreifelement 45 aus Fig. 11 ist in seiner äusseren Form ähnlich, wie die in den vorherigen Figuren gezeigten Eingreifelemente 23. Es ist als in einer Schwenkebene liegender, in etwa V-förmiger Haken ausgebildet, der zwei an einer Seite miteinander verbundene Schenkel S1 und S2 aufweist. Das Eingreifelement 45 hat am freien Ende des zweiten Schenkels S2 eine Nabe 46 mit einer Achsbohrung 47 angeformt, die der verschwenkbaren Lagerung dient. Am freien Ende des ersten Schenkels S1 ist ein Kontaktkopf 45c ausgebildet, mit dem das Eingreifelement 45 in der Eingreifposition mit dem Laufwagen 12 in Eingriff kommt. Die Besonderheit besteht nun darin, dass das Eingreifelement 45 zumindest im Bereich der Schenkel S1 und S2 aus einem elastisch verformbaren Material, z.B. Polyoxymethylen (POM), bestehen, und dass die Schenkel S1 und S2 bis hin zur Nabe 46 durch einen in der Schwenkebene liegenden Schlitz 48 in zwei gleichartige Teilschenkel S1a,b (Fig. 11) und S2a,b (Fig. 13) unterteilt sind, die beim Passieren eines schnelleren Laufwagens 12 durch dessen Eingriffselement 18 soweit aufgespreizt werden, dass der Laufwagen 12 passieren kann.

Damit dies besonders leicht geht, ohne dass die Spreizung auch in der Gegenrichtung eintritt, ist bei dem Eingreifelement 45 im Bereich des ersten Schenkels S1 auf der Aussenseite ein in den Schlitz 48 mündender Einlauftrichter 49 ausgebildet. Zur Einleitung des Spreizvorgangs taucht das Eingriffselement 18 am Laufwagen in diesen Einlauftrichter 49 und spreizt aufgrund der schrägen Trichterwände vor allem die Teilschenkel S1a und S1 b soweit elastisch auseinander, dass ein Passieren möglich wird.

Fig. 12 und 13 zeigen aus unterschiedlichen Blickrichtungen die Konfiguration einer Förderanlage mit einem mit den geschlitzten Eingreifelementen 45 ausgestatteten Stauförderer SF' und einem zugehörigen (unveränderten) Laufwagen 12.

## Patentansprüche

1. Förderanlage (10) für den Transport von Gegenständen, insbesondere Waren, entlang einer vorgegebenen Strecke, umfassend eine Laufschiene (11) sowie wenigstens einen auf dieser Laufschiene (11) laufenden, entlang der Laufschiene (11) frei beweglichen Laufwagen (12), sowie weiterhin umfassend eine angetriebene Eingreifvorrichtung (13), welche sich zumindest abschnittsweise entlang der Laufschiene (11) erstreckt und eine Mehrzahl von entlang der Laufschiene (11) bewegbaren Eingreifelementen (23, 23', 23") umfasst, die zum Steuern der Bewegung des wenigstens einen Laufwagens (12) mit dem Laufwagen (12) in Eingriff gebracht werden können, **dadurch gekennzeichnet, dass** die Eingreifelemente (23, 23', 23") zwischen zwei stabilen Positionen hin und her bewegbar sind, wobei die Eingreifelemente (23, 23', 23") in den beiden stabilen Positionen jeweils einrasten, wobei in der ersten stabilen Position die Eingreifelemente (23, 23', 23") relativ zum wenigstens einen Laufwagen (12) am Laufwagen (12) vorbei bewegt werden können, ohne mit dem Laufwagen (12) in einer Nichteingreifposition in Eingriff zu kommen, und wobei in der zweiten stabilen Position die Eingreifelemente (23, 23', 23") bei einer Bewegung relativ zum wenigstens einen Laufwagen (12) am Laufwagen (12) vorbei in einer Eingreifposition zwangsweise mit dem wenigsten einen Laufwagen (12) in Eingriff kommen.

2. Förderanlage nach Anspruch 1, **dadurch gekennzeichnet, dass** die Eingreifelemente (23, 23', 23") in der Eingreifvorrichtung (13) in Bewegungsrichtung hintereinander und untereinander gleichmässig beabstandet angeordnet sind.

3. Förderanlage nach Anspruch 1 oder 2, **dadurch gekennzeichnet, dass** die Eingreifelemente (23, 23', 23") jeweils um eine Schwenkachse (24) verschwenkbar gelagert sind, und durch ein Verschwenken um die Schwenkachse (24) von der einen in die andere stabile Position gebracht werden können.

4. Förderanlage nach einem der Ansprüche 1 bis 3, **dadurch gekennzeichnet, dass** die Raststellung der Eingreifelemente (23, 23', 23") in der zweiten stabilen Position so ausgebildet ist, dass die Raststellung eines Eingreifelements (23) aufgehoben und das Eingreifelement (23) in die erste stabile Position verschwenkt wird, wenn eine entgegen der Bewegungsrichtung wirkende Kraft vorbestimmter Grösse an diesem Eingreifelement (23) angreift.

5. Förderanlage nach Anspruch 4, **dadurch gekennzeichnet, dass** sich die Eingreifelemente (23, 23', 23") beim Verschwenken jeweils an einem relativ zur Schwenkachse (24) feststehenden Rastelement (25) entlang bewegen und in den beiden stabilen Positionen jeweils mit einer Ausnehmung (23a,b) am Rastelement (25) einrasten.

6. Förderanlage nach Anspruch 5, **dadurch gekennzeichnet, dass** das Rastelement als parallel zur Schwenkachse (24) ausgerichteter Rastbolzen (25) ausgebildet ist, und dass die Ausnehmungen am Eingreifelement (23, 23', 23") als Rastmulden (23a,b) ausgebildet sind.

7. Förderanlage nach Anspruch 6, **dadurch gekennzeichnet, dass** die Eingreifelemente (23, 23', 23") als in der Schwenkebene liegende, in etwa V-förmige Haken ausgebildet sind, die zwei an einer Seite miteinander verbundene Schenkel (S1, S2) aufweisen, dass die Eingreifelemente (23, 23', 23") jeweils am freien Ende des zweiten Schenkels (S2) verschwenkbar gelagert sind, und dass am freien Ende des ersten Schenkels (S1) ein Kontaktkopf (23c) ausgebildet ist, mit dem das Eingreifelement (23, 23', 23") in der Eingreifposition mit dem Laufwagen (12) in Eingriff kommt.

8. Förderanlage nach Anspruch 1, **dadurch gekennzeichnet, dass** die Eingreifelemente (23, 23', 23") an einer Kette (22) angebracht sind, die angetrieben und abschnittweise entlang der Laufschiene (11) bewegbar ist, und dass die Schwenkachse (24) jedes Eingreifelements (23) jeweils mit einer Gelenkachse der Kette (22) zusammenfällt.

9. Förderanlage nach Anspruch 8, **dadurch gekennzeichnet, dass** die Kette (22) als Endloskette ausgebildet und über wenigstens zwei Umlenkräder (27, 28) geführt ist.

10. Förderanlage nach Anspruch 8, **dadurch gekennzeichnet, dass** die Kette (22) in dem Abschnitt, in welchem sie zum Zwecke des Eingriffs entlang der Laufschiene (11) bewegt wird, derart in einer Führungsschiene (19) geführt wird, dass sich die an der Kette (22) angeordneten Eingreifelemente (23, 23', 23") ausserhalb der Führungsschiene (19) befinden und bewegen.

11. Förderanlage nach Anspruch 8, **dadurch gekennzeichnet, dass** ein Mechanismus (30, 31, 32; 33-41; 42-44) vorgesehen ist, mit welchem in der Nichteingreifposition befindliche Eingreifelemente (23, 23', 23") zurück in die Eingreifposition gebracht werden können.

12. Förderanlage nach Anspruch 11, **dadurch gekennzeichnet, dass** der Mechanismus eine ortsfeste Führungskulisse (31) umfasst, welche von den vorbeibewegten Eingreifelementen (23', 23") abgetastet wird.

13. Förderanlage nach Anspruch 12, **dadurch gekennzeichnet, dass** an den Eingreifelementen (23', 23") Mittel (30, 32) zum Abtasten der Führungskulisse (31) angeordnet sind.

14. Förderanlage nach Anspruch 13, **dadurch gekennzeichnet, dass** die Abtastmittel eine an jedem Eingreifelement (23') drehbar angeordnete Abtastrolle (30) umfassen.

15. Förderanlage nach Anspruch 13, **dadurch gekennzeichnet, dass** die Abtastmittel einen an jedem Eingreifelement (23") ausgebildeten Abtastnocken (32) umfassen.

16. Förderanlage nach Anspruch 11, **dadurch gekennzeichnet, dass** der Mechanismus bewegbare Andrückmittel (38, 44) umfasst, welche zum Verschwenken der Eingreifelemente (23) gegen die vorbeibewegten Eingreifelemente (23) gedrückt werden.

17. Förderanlage nach Anspruch 16, **dadurch gekennzeichnet, dass** die Andrückmittel an einer synchron laufenden Kette (34) an die Eingreifelemente (23) herangeführte Andrückelemente (38) umfassen.

18. Förderanlage nach Anspruch 16, **dadurch gekennzeichnet, dass** die Andrückmittel wenigsten eine stationäre Andrückeinheit (42) mit einem an die vorbeibewegten Eingreifelemente (23) heranführbaren Wirkelement (44) umfassen.

19. Förderanlage nach Anspruch 1, **dadurch gekennzeichnet, dass** die Eingreifelemente (45) derart ausgebildet sind, dass sie in der zweiten stabilen Position bei einer schnelleren Bewegung des wenigstens einen Laufwagens (12) den Laufwagen (12) passieren lassen.

20. Förderanlage nach Anspruch 19, **dadurch gekennzeichnet, dass** die Eingreifelemente (45) als in einer Schwenkebene liegende, in etwa V-förmige Haken ausgebildet sind, die zwei an einer Seite miteinander verbundene Schenkel (S1, S2) aufweisen, dass die Eingreifelemente (45) jeweils am freien Ende des zweiten Schenkels (S2) verschwenkbar gelagert sind, dass am freien Ende des ersten Schenkels (S1) ein Kontaktkopf (45c) ausgebildet ist, mit dem das Eingreifelement (45) in der Eingreifposition mit dem Laufwagen (12) in Eingriff kommt, dass die Eingreifelemente (45) zumindest im Bereich der Schenkel (S1, S2) aus einem elastisch verformbaren Material bestehen, und dass die Schenkel (S1, S2) der Eingreifelemente (45) jeweils durch einen in der Schwenkebene liegenden Schlitz (48) in zwei gleichartige Teilschenkel (S1a,b; S2a,b) unterteilt sind, die beim Passieren eines schnelleren Laufwagens (12) aufgespreizt werden.

21. Förderanlage nach Anspruch 20, **dadurch gekennzeichnet, dass** bei den Eingreifelementen (45) jeweils im Bereich des ersten Schenkels (S1) auf der Aussenseite ein in den Schlitz (48) mündender Einlauftrichter (49) ausgebildet ist, welcher das Aufspreizen der Teilschenkel (S1a,b; S2a,b) durch ein am Laufwagen (12) angebrachtes Eingriffselement (18) ermöglicht bzw. erleichtert.

## Claims

1. Conveying installation (10) for transporting articles, in particular goods, along a predetermined route, comprising a running rail (11) and at least one carriage (12), which runs on said running rail (11) and is freely movable along the running rail (11), and also comprising a driven engagement apparatus (13) which extends, at least in part, along the running rail (11) and comprises a plurality of engagement elements (23, 23', 23"), which can be moved along the running rail (11) and, in order to control the movement of the at least one carriage (12), can be brought into engagement with the carriage (12), **characterized in that** the engagement elements (23, 23', 23") can be moved back and forth between two stable positions, wherein the engagement elements (23, 23', 23") respectively latch in in the two stable positions, wherein, in the first stable position, the engagement elements (23, 23', 23") can be moved, relative to the at least one carriage (12), past the carriage (12) without coming into engagement with the carriage (12) - non-engagement position, and wherein, in the second stable position, the engagement elements (23, 23', 23") when moving, relative to the at least one carriage (12), past the carriage (12) in an engagement position inevitably end up engaged with the at least one carriage (12).

2. Conveying installation according to Claim 1, **characterized in that** the engagement elements (23, 23', 23") in the engagement apparatus (13) are arranged at uniform distances apart from one another and one behind the other in the movement direction.

3. Conveying installation according to Claim 1 or 2, **characterized in that** the engagement elements (23, 23', 23") are mounted such that they can be pivoted in each case about a pivot pin (24), and can be moved from the one stable position into the other stable position by virtue of being pivoted about the pivot pin (24) .

4. Conveying installation according to one of Claims 1 to 3, **characterized in that** the latching position of the engagement elements (23, 23', 23") in the second stable position is such that the latching position of an engagement element (23) is disabled, and the engagement element (23) is pivoted into the first stable position, when said engagement element (23) is subjected to a force of predetermined magnitude acting counter to the movement direction.

5. Conveying installation according to Claim 4, **characterized in that** the engagement elements (23, 23', 23"), as they pivot, move along in each case a latching element (25), which is fixed relative to the pivot pin (24), and, in the two stable positions, they latch in on the latching element (25) in each case by way of a recess (23a,b).

6. Conveying installation according to Claim 5, **characterized in that** the latching element is designed in the form of a latching bolt (25), which is oriented parallel to the pivot pin (24), and **in that** the recesses on the engagement element (23, 23', 23") are designed in the form of latching hollows (23a,b).

7. Conveying installation according to Claim 6, **characterized in that** the engagement elements (23, 23', 23") are designed in the form of approximately V-shaped hooks, which are located in the pivoting plane and have two limbs (S1, S2) connected to one another on one side, **in that** the engagement elements (23, 23', 23") are mounted such that they can be pivoted in each case at the free end of the second limb (S2), and that at the free end of the first limb (S1) a contact head (23c) is formed, with which the engagement element (23, 23', 23"), in the engagement position, comes into engagement with the carriage (12).

8. Conveying installation according to Claim 1, **characterized in that** the engagement elements (23, 23', 23") are fitted on a chain (22), which is driven and moveable, at least in part, along the running rail (11), and **in that** the pivot pin (24) of each engagement element (23) coincides in each case with a joint axis of the chain (22).

9. Conveying installation according to Claim 8, **characterized in that** the chain (22) is designed in the form of an endless chain and is guided over at least two deflecting wheels (27, 28).

10. Conveying installation according to Claim 8, **characterized in that**, along the portion in which the chain (22)is moved along the running rail (11) for engagement purposes, said the chain (22) is guided in a guide rail (19) such that the engagement elements (23, 23', 23"), which are arranged on the chain (22), are located, and moved, outside the guide rail (19).

11. Conveying installation according to Claim 8, **characterized in that** a mechanism (30, 31, 32; 33-41; 42-44) is provided by means of which engagement elements (23, 23', 23") which are located in the non-engagement position can be moved back into the engagement position.

12. Conveying installation according to Claim 11, **characterized in that** the mechanism comprises a fixed-position guide track (31), which the engagement elements (23', 23") follow, in contact therewith, as they move past.

13. Conveying installation according to Claim 12, **characterized in that** means (30, 32) for following the guide track (31), in contact therewith, are arranged on the engagement elements (23', 23").

14. Conveying installation according to Claim 13, **characterized in that** the follower means comprise a follower roller (30), which is arranged in a rotatable manner on each engagement element (23').

15. Conveying installation according to Claim 13, **characterized in that** the follower means comprise a follower cam (32), which is formed on each engagement element (23").

16. Conveying installation according to Claim 11, **characterized in that** the mechanism comprises movable pressure-exerting means (38, 44) which, in order to pivot the engagement elements (23), are pressed against the engagement elements (23) as they move past.

17. Conveying installation according to Claim 16, **characterized in that** the pressure-exerting means comprise pressure-exerting elements (38) which are guided onto the engagement elements (23) on a synchronously running chain (34).

18. Conveying installation according to Claim 16, **characterized in that** the pressure-exerting means comprise at least one stationary pressure-exerting unit (42) with an active element (44) which can be guided up to the engagement elements (23) as they move past.

19. Conveying installation according to Claim 1, **characterized in that** the engagement elements (45) are designed such that, in the second stable position, when the at least one carriage (12) moves relatively quickly, they allow the carriage (12) to pass.

20. Conveying installation according to Claim 19, **characterized in that** the engagement elements (45) are designed in the form of approximately V-shaped hooks, which are located in a pivoting plane and have two limbs (S1, S2) connected to one another on one side, **in that** the engagement elements (45) are mounted such that they can be pivoted in each case at the free end of the second limb (S2), **in that** a contact head (45c) is formed at the free end of the first limb (S1), the engagement element (45), in the engagement position, coming into engagement with the carriage (12) by way of said contact head, **in that** the engagement elements (45) consist of an elastically deformable material at least in the region of the limbs (S1, S2), and **in that** the limbs (S1, S2) of the engagement elements (45) are subdivided, in each case by a slot (48) located in the pivoting plane, into two similar sub-limbs (Sla,b; S2a,b), which are spread apart when a carriage (12) passes.

21. Conveying installation according to Claim 20, **characterized in that** each of the engagement elements (45) have formed in the region of the first limb (S1), on the outer side, an entry funnel (49), which opens into the slot (48) and makes it possible, or easier, for the sub-limbs (Sla,b; S2a,b) to be spread apart by an engagement element (18) fitted on the carriage (12).

## Revendications

1. Installation de convoyage (10) pour le transport dobjets, en particulier de marchandises, le long dun trajet prdfini, comportant un rail de roulement (11) ainsi quau moins un chariot (12) roulant sur ce rail de roulement (11) et librement mobile le long du rail de roulement (11), et comportant en outre un dispositif dentre en prise (13) entran, lequel stend au moins par endroits le long du rail de roulement (11) et comporte une pluralit dlments dentre en prise (23, 23', 23") mobiles le long du rail de roulement (11), lesquels peuvent tre amens en prise avec le chariot (12) pour la commande du dplacement dudit au moins un chariot (12), caractrise en ce que les lments dentre en prise (23, 23', 23") peuvent tre anims dun mouvement de va-et-vient entre deux positions stables, les lments dentre en prise (23, 23', 23") sencliquetant respectivement dans les deux positions stables, les lments dentre en prise (23, 23', 23") pouvant, dans la premire position stable, tre dplacs par rapport audit au moins un chariot (12) devant le chariot (12), sans venir en prise avec le chariot (12) dans une position de non entre en prise et, dans la deuxime position stable, les lments dentre en prise (23, 23', 23") venant en prise obligatoirement avec ledit au moins un chariot (12) lors dun dplacement par rapport audit au moins un chariot (12) devant le chariot (12) dans une position dentre en prise.

2. Installation de convoyage selon la revendication 1, caractrise en ce que les lments dentre en prise (23, 23', 23") dans le dispositif dentre en prise (13) sont disposs les uns derrire les autres dans une direction de dplacement et de manire espace uniformment les uns des autres.

3. Installation de convoyage selon la revendication 1 ou 2, caractrise en ce que les lments dentre en prise (23, 23', 23") sont monts pivotants respectivement autour dun axe de pivotement (24), et peuvent tre, par un pivotement autour de laxe de pivotement (24), amens de lune des positions stables lautre.

4. Installation de convoyage selon lune des revendications 1 3, caractrise en ce que la position dencliquetage des lments dentre en prise (23, 23', 23") dans la deuxime position stable est ralise de telle sorte que la position dencliquetage dun lment dentre en prise (23) est supprime et llment dentre en prise (23) est pivot dans la premire position stable lorsquune force damplitude prdtermine, agissant en sens inverse au sens de dplacement, agit sur cet lment dentre en prise (23).

5. Installation de convoyage selon la revendication 4, caractrise en ce que les lments dentre en prise (23, 23', 23"), lors du pivotement, se dplacent respectivement le long dun lment dencliquetage (25) fixe par rapport laxe de pivotement (24) et sencliqutent respectivement avec un videment (23a,b) sur llment dencliquetage (25) dans les deux positions stables.

6. Installation de convoyage selon la revendication 5, caractrise en ce que llment dencliquetage est ralis sous forme de boulon dencliquetage (25) orient paralllement laxe de pivotement (24), et en ce que les videments sur llment dentre en prise (23, 23', 23") sont raliss sous forme de cavits dencliquetage (23a,b).

7. Installation de convoyage selon la revendication 6, caractrise en ce que les lments dentre en prise (23, 23', 23") sont raliss sous forme de crochets approximativement en forme de V situs dans le plan de pivotement, lesquels comprennent deux branches (S1, S2) relies lune lautre au niveau dun ct, en ce que les lments dentre en prise (23, 23', 23") sont monts pivotants respectivement lextrmit libre de la deuxime branche (S2), et en ce qu lextrmit libre de la premire branche (S1) est ralise une tte de contact (23c) laide de laquelle llment dentre en prise (23, 23', 23") vient en prise avec le chariot (12) dans la position dentre en prise.

8. Installation de convoyage selon la revendication 1, caractrise en ce que les lments dentre en prise (23, 23', 23") sont fixs une chane (22) qui est entrane et mobile sur certaines parties le long du rail de roulement (11), et en ce que laxe de pivotement (24) de chaque lment dentre en prise (23) concide respectivement avec un axe darticulation de la chane (22) .

9. Installation de convoyage selon la revendication 8, caractrise en ce que la chane (22) est ralise sous forme de chane sans fin et est guide par le biais dau moins deux roues de renvoi (27, 28).

10. Installation de convoyage selon la revendication 8, caractrise en ce que la chane (22) est, dans la partie dans laquelle elle est dplace le long du rail de roulement (11) en vue de lentre en prise, guide dans un rail de guidage (19) de telle sorte que les lments dentre en prise (23, 23', 23") disposs sur la chane (22) se situent et se dplacent lextrieur du rail de guidage (19).

11. Installation de convoyage selon la revendication 8, caractrise en ce quun mcanisme (30, 31, 32 ; 33-41 ; 42-44) est prvu, laide duquel des lments dentre en prise (23, 23', 23") se trouvant dans la position de non entre en prise peuvent tre ramens la position dentre en prise.

12. Installation de convoyage selon la revendication 11, caractrise en ce que le mcanisme comporte une coulisse de guidage (31) fixe, laquelle est palpe par les lments dentre en prise (23', 23") dplacs devant celle-ci.

13. Installation de convoyage selon la revendication 12, caractrise en ce que des moyens (30, 32) de palpage de la coulisse de guidage (31) sont disposs sur les lments dentre en prise (23', 23").

14. Installation de convoyage selon la revendication 13, caractrise en ce que les moyens de palpage comportent un galet palpeur (30) dispos de manire rotative sur chaque lment dentre en prise (23').

15. Installation de convoyage selon la revendication 13, caractrise en ce que les moyens de palpage comportent un ergot palpeur (32) form sur chaque lment dentre en prise (23").

16. Installation de convoyage selon la revendication 11, caractrise en ce que le mcanisme comporte des moyens de pression (38, 44) mobiles, lesquels sont presss contre les lments dentre en prise (23) dplacs devant ceux-ci pour pivoter les lments dentre en prise (23).

17. Installation de convoyage selon la revendication 16, caractrise en ce que des moyens de pression comprennent, sur une chane (34) tournant de manire synchrone, des lments de pression (38) rapprochs des lments dentre en prise (23).

18. Installation de convoyage selon la revendication 16, caractrise en ce que les moyens de pression comportent au moins une unit de pression (42) fixe dote dun lment fonctionnel (44) pouvant tre rapproch des lments dentre en prise (23) dplacs devant celui-ci.

19. Installation de convoyage selon la revendication 1, caractrise en ce que les lments dentre en prise (45) sont raliss de telle sorte que, dans la deuxime position stable, ils laissent passer le chariot (12) dans le cas dun dplacement plus rapide dudit au moins un chariot (12).

20. Installation de convoyage selon la revendication 19, caractrise en ce que les lments dentre en prise (45) sont raliss sous forme de crochets approximativement en forme de V situs dans un plan de pivotement, lesquels comprennent deux branches (S1, S2) relies lune lautre au niveau dun ct, en ce que les lments dentre en prise (45) sont monts pivotants respectivement lextrmit libre de la deuxime branche (S2), et en ce qu lextrmit libre de la premire branche (S1) est ralise une tte de contact (45c) laide de laquelle llment dentre en prise (45) vient en prise avec le chariot (12) dans la position dentre en prise, en ce que les lments dentre en prise (45) sont constitus dun matriau dformable lastiquement au moins dans la rgion des branches (S1, S2), et en ce que les branches (S1, S2) des lments dentre en prise (45) sont divises en deux branches partielles similaires (S1a,b ; S2a,b) respectivement par une fente (48) situe dans le plan de pivotement, lesquelles branches partielles sont cartes lors dun passage dun chariot (12) plus rapide.

21. Installation de convoyage selon la revendication 20, caractrise en ce que, dans les lments dentre en prise (45), respectivement dans la rgion de la premire branche (S1) sur le ct extrieur, est ralis un entonnoir dentre (49) dbouchant dans la fente (48), lequel permet ou facilite lcartement des branches partielles (S1a,b ; S2a,b) au moyen dun lment dentre en prise (18) fix au chariot (12).
